# EUROPÄISCHE PATENTSCHRIFT

(11) **EP 3 745 287 B1**
(45) Veröffentlichungstag und Bekanntmachung des Hinweises auf die Patenterteilung: **16.03.2022**
(21) Anmeldenummer: 19000264.2
(22) Anmeldetag: 28.05.2019
(51) Int. Cl.: G06F 21/14, G06F 21/12

(54) **SCHÜTZEN EINER SOFTWAREAPPLIKATION**
PROTECTION OF A SOFTWARE APPLICATION
PROTECTION D'UNE APPLICATION DU LOGICIEL

(43) Veröffentlichungstag der Anmeldung: 02.12.2020
(73) Patentinhaber: Giesecke+Devrient Mobile Security GmbH, 81677 München (DE)
(72) Erfinder: Schuster, Helmut, 87660 Irsee (DE); Albert, Daniel, 81737 München (DE)
(74) Vertreter: Giesecke + Devrient IP

(56) Entgegenhaltungen:
- EP-A2- 1 376 310
- US-A1- 2010 115 287
- US-B1- 10 068 069

## Beschreibung

Die vorliegende Erfindung betrifft ein Verfahren zum automatischen Erkennen von zu schützenden Anteilen einer Softwareapplikation, eine Computervorrichtung, die eingerichtet ist, das erfindungsgemäße Verfahren auszuführen, eine Softwareapplikation, die mittels des erfindungsgemäßen Verfahrens abgesichert wurde, sowie eine Computervorrichtung, insbesondere ein mobiles Endgerät, auf welcher bzw. welchem eine mittels des erfindungsgemäßen Verfahrens abgesicherte Softwareapplikation bereitgestellt ist.

Mobile Endgeräte, beispielsweise in Form von Smartphones, Tablet-Computern, persönlichen digitalen Assistenten oder dergleichen, werden zunehmend verwendet, um digitale Transaktionen auszuführen, wie etwa das Einkaufen von Waren im Internet, Online-Banking, oder dergleichen. Bei der Durchführung einer solchen digitalen Transaktion interagiert in der Regel eine auf dem mobilen Endgerät installierte Softwareapplikation (häufig kurz "App" genannt) mit einem Server. Um die Transaktionen ausführen und abwickeln zu können, sind in der installierten Softwareapplikation üblicher Weise sicherheitskritische Daten hinterlegt, wie zum Beispiel Passwörter oder kryptographische Schlüssel. Auch sind zunehmend sogenannte "Corporate Apps" verbreitet, die Mitarbeitern eines Unternehmens, zum Beispiel über deren Smartphone, einen sicheren Zugang zu dem Unternehmensnetzwerk bereitstellen.

Derartige Softwareapplikationen müssen insofern zunehmend gegen Hackerangriffe abgesichert werden, um zu verhindern, dass zum Beispiel eine Schadsoftware, die in das betreffende Endgerät eingeschleust wurde, zum Beispiel Passwörter, Schlüssel oder andere sicherheitskritische Daten, wie zum Beispiel Zugangsdaten zu einem Firmennetzwerk ausspäht. Im Fall von Banking Apps ist es zum Beispiel erforderlich, diese gegen den elektronischen Diebstahl von Konto- und Transaktionsdaten abzusichern, um Computerbetrug zu verhindern.

Das zur Abwehr solcher Angriffe erforderliche Sicherheitsniveau wird heutzutage im Laufe des Entwicklungsprozesses einer Softwareapplikation durch geeignete Sicherungseinrichtungen bzw. Softwarewerkzeuge zur Absicherung der Softwareapplikation bereitgestellt, indem Sicherheitsmaßnahmen in die Softwareapplikation integriert werden. So werden zum Beispiel Obfuskatoren eingesetzt, um sicherheitskritische Programmcodeanteile und -abschnitte einer Softwareapplikation zu obfuskieren bzw. so zu verschleiern, dass ein Reverse Engineering erschwert oder unmöglich wird. US 2010/115287 offenbart eine Methode zum Schützen einer Software durch Obfuskation von sicherheitskritischen Konstanten (z.B. Hashwerten, Schlüsseln und Anmeldedaten), insbesondere durch automatisches Identifizieren der Konstanten in dem zu schützenden Quellcode, und Ersetzen der identifizierten Konstanten mit einer Indirektionstabelle, die es ermöglicht die ursprünglichen Konstanten über eine oder mehrere Indirektionsstufen abzurufen.

Das Obfuskieren des Assemblercodes bzw. Maschinencodes einer Softwareapplikation im Zuge des Bereitstellens einer Softwareapplikation für mobile Endgeräte ist zum Beispiel aus der DE 10 2014 019 090 A1 bekannt.

Zum Absichern einer Softwareapplikation können beispielsweise Variablennamen und Klassennamen geändert oder Konstanten verschlüsselt werden. Solche Sicherungsmaßnahmen müssen jedoch bei der Softwareentwicklung vorbereitet werden, indem Markierungen in den Quellcode eingefügt werden, zum Beispiel als Kommentare, die dessen sicherheitskritische Anteile identifizieren. Diese Markierungen werden später von Softwarewerkzeugen genutzt, zum Beispiel von Obfuskatoren, um an diesen Stellen im Programmcode Sicherheitsmaßnahmen und Verschleierungen vorzunehmen.

Das manuelle Einfügen von Markierungen und deren Pflege durch den Softwareentwickler ist jedoch einerseits ein an sich unerwünschter Eingriff in die Entwicklungsarbeit und andererseits fehleranfällig, denn es können sicherheitskritische Variablen, Konstanten oder Funktionen übersehen und Markierungen vergessen werden, so dass dort keine Sicherungsmaßnahmen vorgenommen werden. Die diesbezügliche Schulung der Softwareentwickler ist zudem aufwändig und kostspielig, ohne dass Fehler und Risiken dadurch vollständig vermieden werden könnten.

Im Falle von Softwareapplikationen für mobile Endgeräte, die meist mit den Betriebssystemen Google Android oder Apple iOS ausgestattet sind, werden Softwareentwicklungsumgebungen angeboten, wie das Android Studio für die Softwareentwicklung für das Android Betriebssystem oder Xcode für die Softwareentwicklung für das iOS Betriebssystem, die eine Vielzahl von aufeinander angepassten Softwarewerkzeugen bereitstellen, auch als "Toolchain" bezeichnet, welche den gesamten Entwicklungsprozess einer (ungeschützten) Softwareapplikation vom Quellcode bis zum auslieferbaren Installationspaket im APK Format für Android oder im .ipa Format für iOS abdecken.

Die zur Absicherung der entwickelten Softwareapplikationen benötigten Softwarewerkzeuge sind jedoch in der Regel nicht Bestandteil solcher Entwicklungsumgebungen. Es ist daher erforderlich, diese Softwarewerkzeuge in die betreffende Toolchain zu integrieren, was meist fehleranfällige Anpassungen an den betreffenden Softwarewerkzeugen erfordert. Ohnehin muss eine derartige Integration und Anpassung bei jeder Aktualisierung des betreffenden Betriebssystems erneut vorgenommen werden.

Insofern ist es die Aufgabe der vorliegenden Erfindung, eine Lösung zu schaffen, die die beschriebenen Nachteile des Standes der Technik vermeidet und ein verbessertes Verfahren zum Erkennen von zu schützenden Anteilen einer Softwareapplikation anzugeben.

Gelöst wird diese und andere Aufgaben durch ein Verfahren und Vorrichtungen sowie eine Softwareapplikation gemäß den unabhängigen Ansprüchen. In den abhängigen Ansprüchen sind vorteilhafte Ausgestaltungen und Weiterbildungen der Erfindung angegeben.

Gemäß einem ersten Aspekt der Erfindung umfasst ein Verfahren zum automatischen Erkennen von abzusichernden Anteilen einer Softwareapplikation zunächst ein Bereitstellen des Programmcodes der betreffenden Softwareapplikation. Anschließend werden in dem bereitgestellten Programmcode Aufrufe von API-Funktionen identifiziert, die einen Aufbau von Netzwerkverbindungen bewirken, und es wird für identifizierte Aufrufe eine Verbindungsvariable erfasst, die die betreffende Netzwerkverbindung repräsentiert und/oder bezeichnet. Im Zusammenhang mit Transaktionen und Datenkommunikation betreffend eine derart erfasste Verbindungsvariable werden anschließend Verweise auf abzusichernde Anteile und/oder Informationen zu abzusichernden Anteilen des Programmcodes in einer Datenstruktur zur späteren Absicherung dieser Programmcodeanteile abgelegt.

Erfindungsgemäß werden einerseits Transaktionsvariablen und/oder Transaktionskonstanten identifiziert, welche im Zusammenhang mit der erfassten Verbindungsvariablen stehen, und Informationen über die identifizierten Transaktionsvariablen und/oder Transaktionskonstanten werden in der Datenstruktur abgelegt. Andererseits werden Zuweisungsvariablen und/ oder Zuweisungskonstanten identifiziert, die im Zusammenhang mit einer Zuweisung eines Wertes an eine identifizierte Transaktionsvariable stehen, und Informationen über diese identifizierten Zuweisungsvariablen und/oder Zuweisungskonstanten werden ebenfalls in der Datenstruktur abgelegt.

Die Erfindung beruht auf der Erkenntnis, dass in der überwiegenden Zahl der Softwareapplikationen gerade die Zugriffe der Applikation auf bzw. deren Interaktion mit einen Server lohnende Ziele für Manipulationen und Angriffe sind. Eine sicherheitskritische Transaktion wird üblicherweise von der Softwareapplikation initiiert und von einem Server abhängig von der Datenkommunikation mit der Applikation umgesetzt. Dies gilt zum Beispiel für Banking-Applikationen und Geschäfte, für Corporate Apps und den Datenzugriff auf Geschäftsdaten und dergleichen mehr. In all diesen Fällen signalisieren Netzwerkverbindungen der Softwareapplikation eine sicherheitskritische Datenkommunikation mit einem Server und entsprechende Transaktionen.

Basierend auf dieser Erkenntnis schlägt die Erfindung vor, sicherheitskritische und insofern abzusichernde Anteile einer Softwareapplikation über Variablen, Konstanten und Funktionen zu identifizieren, die im Zusammenhang mit einer Datenkommunikation über eine Netzwerkverbindung zwischen der Softwareapplikation und einem Server stehen.

Entsprechend wird der Programmcode einer Softwareapplikation auf Funktionsaufrufe untersuchen, die den Aufbau einer Netzwerkverbindung bewirken. Derartige Funktionsaufrufe betreffen in der Regel API-Funktionen, also solche Funktionen, die im Rahmen einer Anwendungsprogrammierschnittstelle des Betriebssystems der Zielplattform zur Verfügung gestellt werden. API-Funktionen sind über die Schnittstellendefinition wohldefiniert und leicht auffindbar.

Da eine bestehende Netzwerkverbindung bei üblichen Programmiersprachen durch eine Verbindungsvariable bezeichnet und repräsentiert wird, welche den Zugriff auf die Netzwerkverbindung ermöglicht, können Transaktionsvariablen und/oder Transaktionskonstanten ermittelt werden, die mit einer Transaktion und der resultierenden Datenkommunikation über die durch die Verbindungsvariable repräsentierte Netzwerkverbindung in Zusammenhang stehen. Die Anteile des Programmcodes, die solche Transaktionsvariablen und -konstanten nutzen, sind insofern sicherheitskritisch und werden geeignet abgesichert. Entsprechend werden Informationen zu den identifizierten Transaktionsvariablen und - konstanten in der Datenstruktur abgelegt.

Für so identifizierte Transaktionsvariablen werden in einem weiteren Schritt, der vorzugsweise rekursiv ausgeführt wird, diejenigen Zuweisungsvariablen und/oder Zuweisungskonstanten ermittelt, welche im Rahmen einer Zuweisung eines Wertes an eine Transaktionsvariable verwendet werden bzw. welche einen solchen zugewiesenen Wert bereitstellen. Auch Informationen zu den identifizierten Zuweisungsvariablen und/oder Zuweisungskonstanten werden in der Datenstruktur abgelegt.

Die Identifizierung der Verbindungs-, Transaktions- und Zuweisungsvariablen und -konstanten lässt sich auf einfache Weise automatisieren, so dass der gesamte Prozess der Erkennung von abzusichernden Anteilen einer Softwareapplikation anhand von Programmstrukturen, die mit einer Datenkommunikation und entsprechenden Transaktionen in Verbindung stehen, zuverlässige vollautomatisch abläuft. Softwareentwickler werden auf diese Weise von jeglicher manueller Tätigkeit zur Absicherung sicherheitskritischer Anteile einer Softwareapplikation entbunden. Der damit einhergehende zeitliche und Kostenaufwand entfällt ebenso, wie die entsprechende Schulung von Softwareentwicklern.

Die Zuweisungsvariablen und Zuweisungskonstanten werden in der Softwareapplikation vorzugsweise anhand der folgenden drei alternativen Szenarien identifiziert:
Wenn einer Transaktionsvariablen ein Wert aufgrund einer Berechnung zugewiesen wird, werden alle Variablen und/oder Konstanten identifiziert, die bei der Berechnung verwendet werden und die insbesondere die zugewiesenen Werte repräsentieren, und als Zuweisungsvariablen und/ oder Zuweisungskonstanten in der Datenstruktur gespeichert.

Wenn einer Transaktionsvariablen ein Wert aufgrund eines Aufrufs einer Funktion innerhalb der betreffenden Softwareapplikation zugewiesen wird, werden alle Variablen und/ oder Konstanten identifiziert, welche von dieser Funktion verwendet werden und die insbesondere zur Berechnung des Funktionsergebnisses verwendet werden, welches der Transaktionsvariablen als Wert zugewiesen wird. Die auf diese Weise identifizierten Variablen und/oder Konstanten werden auch als Zuweisungsvariablen und/oder Zuweisungskonstanten in der Datenstruktur gespeichert.

Wenn einer Transaktionsvariablen ein Wert aufgrund eines Aufrufs einer Funktion außerhalb der betreffenden Softwareapplikation zugewiesen wird, insbesondere aufgrund eines Aufrufs eine API-Funktion des Betriebssystems, werden alle Variablen und/oder Konstanten identifiziert, welche an diese Funktion übergeben werden, und als Zuweisungsvariablen und/oder Zuweisungskonstanten in der Datenstruktur gespeichert.

Mittels dieser Fallunterscheidung können alle Zuweisungsvariablen und/oder Zuweisungskonstanten zuverlässig identifiziert werden, von denen die Bereitstellung eines Wertes, der einer Transaktionsvariablen zugewiesen wird, direkt oder indirekt abhängig sind.

Bevorzugt werden die obigen Schritte für alle identifizierten Zuweisungsvariablen erneut ausgeführt, um auch Zuweisungsvariablen und/ oder Zuweisungskonstanten zu identifizieren, die im Zusammenhang mit der Berechnung bzw. Bereitstellung anderer Zuweisungsvariablen stehen. Dieses rekursive Vorgehen wird vorzugsweise so oft wiederholt, bis keine weiteren Zuweisungsvariablen und/oder Zuweisungskonstanten mehr identifiziert werden können. Auf diese Weise werden auch solche sicherheitsrelevanten Variablen und Konstanten identifiziert, die nur sehr indirekt an der Zuweisung eines Wertes an eine Transaktionsvariable beteiligt sind, was das Niveau der Absicherung der Softwareapplikation maximiert.

Alternativ kann die Rekursionstiefe vorgegeben werden und nur eine bestimmte Anzahl von Rekursionen durchgeführt werden, beispielsweise 5,10 oder 20. Dann werden nur solche Zuweisungsvariablen und Zuweisungskonstanten identifiziert, die mit der vorgegebenen Rekursionstiefe erreichbar sind. Bei einer Rekursionstiefe von 5 werden beispielsweise alle solchen Zuweisungsvariablen und/oder Zuweisungskonstanten identifiziert, die nach fünf ineinander geschachtelten Funktionsaufrufen und/oder Berechnungsvorschriften in einen Wert eingehen, der einer Transaktionsvariablen zugewiesen wird. Dabei kann gegebenenfalls berücksichtigt werden, dass eine solche Zuweisungsvariable und/oder Zuweisungskonstante mit zunehmender Rekursionstiefe für einen Angreifer uninteressanter wird, so dass jenseits der vorgegebenen Rekursionstiefe keine spezifische, erfindungsgemäße Absicherung mehr nötig ist, sondern die allgemeinen Schutzmaßnahmen für Softwareapplikationen ausreichen. Die Verwendung einer vorgegebenen Rekursionstiefe verhindert also, dass Ressourcen für die Analyse und den Schutz von nur noch minimal sicherheitskritischen Anteilen der Softwareapplikation aufgewendet werden.

Gemäß einer bevorzugten Ausführungsform wird die Softwareapplikation in binärer Form bereitgestellt. Ausgehend von einer solchen vollständig kompilierten, lauffähigen Form wird aus der Softwareapplikation mittels Disassemblieren und/ oder Dekompilieren eine Pseudocode-Repräsentation erstellt, die dann Ausgangspunkt des erfindungsgemäßen Verfahrens mit den bisher beschriebenen Schritten ist. Das erfindungsgemäße Verfahren und damit die Absicherung sicherheitskritischer Anteile der Softwareapplikation kann also separat nach Beendigung der Softwareentwicklung durchgeführt werden. Es ist deshalb nicht notwendig, die erfindungsgemäße Erkennung und Absicherung von abzusichernden Anteilen der Softwareapplikation in eine Entwicklungsumgebung zu integrieren bzw. diese anzupassen, wenn sich eine Entwicklungsumgebung ändert.

Bei der Softwareapplikation kann es sich beispielsweise um eine Android-App oder iOS-App handeln. Insbesondere kann die Softwareapplikation dann in Form eines Applikationspakets vorliegen, zum Beispiel im APK-Formal für ein Android Betriebssystem oder im .ipa-Format für ein iOS Betriebssystem. In diesem Fall wird die Softwareapplikation als ein solches Applikationspaket bereitgestellt und zerlegt, um die darin enthaltenen Binärcodedateien zu entnehmen und zur weiteren Bearbeitung bereitzustellen. Binärcodedateien innerhalb eines Applikationspaketes liegen beispielsweise als Bytecode vor, insbesondere als Java-Bytecode oder Dalvik-Bytecode und/oder als Maschinencode.

Derartige Softwareapplikationen können innerhalb einer geeigneten Entwicklungsumgebung vollständig erstellt und als Applikationspaket finalisiert werden, zum Beispiel innerhalb des Android Studio oder der Xcode Entwicklungsumgebung, und das fertiggestellte Applikationspaket der Softwareapplikation wird dann als Eingabe des beschriebenen Verfahrens zum automatischen Erkennen von abzusichernden Anteilen verwendet. Das erfindungsgemäße Verfahren ist deshalb vollständig separat von dem eigentlichen Entwicklungsprozess und diesem nachgelagert. Fehleranfällige Abhängigkeiten und Überschneidungen dieser beiden Prozesse werden so vermieden. So kann die Entwicklungsumgebung zum Beispiel aktualisiert werden, ohne dass sich Beeinträchtigungen bei der anschließenden Absicherung der sicherheitskritischen Anteile der Softwareapplikation ergeben.

Bei einer besonders bevorzugten Ausgestaltung des erfindungsgemäßen Verfahrens wird die Datenstruktur oder zumindest die darin enthaltenen Informationen betreffend die Verbindungsvariablen, Transaktionsvariablen und -konstanten und Zuweisungsvariablen und -konstanten einer Sicherungseinrichtung in Form eines Softwarewerkzeugs bereitgestellt, wie zum Beispiel einem Obfuskator, der die in der Datenstruktur verzeichneten sicherheitskritischen Anteile der Softwareapplikation geeignet absichert oder verschleiert.

Die Sicherungseinrichtung kann dabei insbesondere auf die Pseudocode-Repräsentation angewandt und die abgesicherte Pseudocode-Repräsentation kann wieder in das binäre Format transformiert werden, also einen Bytecode oder Maschinencode, beispielsweise indem die abgesicherte Pseudocode-Repräsentation kompiliert wird. Alternativ kann die Sicherungseinrichtung direkt auf das binäre Format der Softwareapplikation angewandt werden.

Die gemäß dem erfindungsmäßen Verfahren abgesicherte Softwareanwendung kann, insbesondere im Fall einer abgesicherten Android oder iOS-App, schließlich in ein Applikationspaket der betreffenden Softwareplattform transformiert werden. Das abgesicherte erhaltene Applikationspaket wird schließlich auf einer geeigneten Softwaredistributionsplattform bereitgestellt, bevorzugt den Google Play Store oder den Apple App Store.

Weitere Aspekte der Erfindung betreffen eine abgesicherte Softwareapplikation, die durch das erfindungsgemäße Verfahren abgesichert wurde und eine Computervorrichtung, vorzugsweise ein mobiles Endgerät, auf dem eine erfindungsgemäß abgesicherte Softwareapplikation gespeichert vorliegt. Schließlich betrifft ein weiterer Aspekt der Erfindung eine Computervorrichtung mit darauf gespeichertem Programmcode, welcher durch Ausführen von einem Prozessor der Computervorrichtung diese veranlasst, das erfindungsgemäße Verfahren auszuführen.

Die beschriebenen Aspekte der Erfindung ermöglichen eine weniger aufwändige und weniger fehleranfällige und weniger arbeits- und kostenintensive Absicherung der sicherheitskritischen Anteile einer Softwareapplikation. Zudem lässt sich die Erfindung auf einfache Weise in bestehende Softwareentwicklungsumgebungen einbinden und bietet ein hohes Maß an Sicherheit.

Weitere Merkmale und Vorteile der Erfindung ergeben sich aus der folgenden Beschreibung erfindungsgemäßer Ausführungsbeispiele sowie weiterer Ausführungsalternativen im Zusammenhang mit der einzigen Zeichnung, die zeigt:

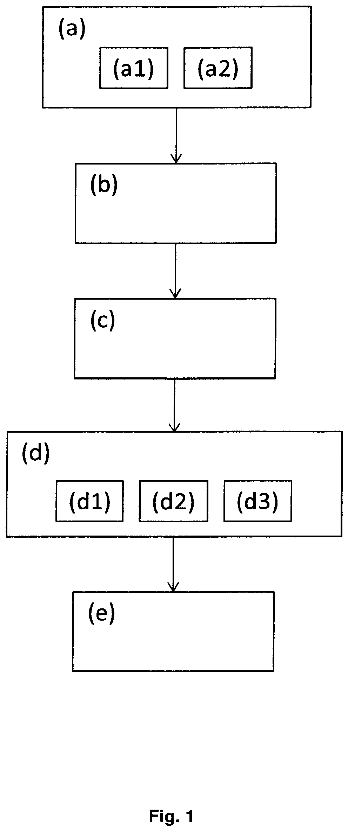

- Fig. 1: ein Schema der wesentliche Schritte eines erfindungsgemäßen Verfahrens zum Absichern einer Softwareapplikation.

Nachfolgend wird mit Bezug auf Fig. 1 ein Verfahren zum automatischen Erkennen von abzusichernden Anteilen einer Softwareapplikation gemäß einer bevorzugten Ausführungsform der Erfindung beschrieben. Das Verfahren ist als computer-implementiertes Verfahren ausgebildet, das auf einer geeigneten Computervorrichtung ausgeführt wird, beispielsweise auf einem Arbeitsplatzrechner, einem Server einer Softwaredistributionsplattform oder dergleichen. Die Computervorrichtung kann hierzu mit einem Speicher und mit einem oder mehreren Prozessoren ausgestattet sein, wobei letztere einen im Speicher abgelegten Programmcode ausführt, der das erfindungsgemäße Verfahren als computerimplementierte Erfindung realisiert.

In einem Schritt (a), der wenigstens die Schritte (a1) und (a2) umfasst, wird die abzusichernde Softwareapplikation bereitgestellt. Die Softwareapplikation kann in unterschiedlichen geeigneten Formaten bereitgestellt werden, zum Beispiel in Schritt (a1) in binärer, ausführbarer Form bzw. als Maschinencode oder als Applikationspaket (APK) für das Android Betriebssystem. Die abzusichernde Softwareapplikation kann also zunächst innerhalb einer geeigneten Entwicklungsumgebung vollständig entwickelt, kompiliert und gebunden werden, beispielsweise mittels dem Android Studio als Android App, ohne dass es zu Überlappungen zwischen dem Entwicklungsprozess und dem anschließenden automatischen Erkennen von abzusichernden Anteilen der Softwareapplikation kommt.

Das Applikationspaket wird dann in einem Schritt (a2) wieder in seine Bestandteile bzw. Einzeldateien zerlegt, im Fall eines Android APK-Applikationspakets beispielsweise mit dem Softwarewerkzeug apktool, um so die Binärdateien der Softwareapplikation als Ausgangspunkt der anschließenden Absicherung zu erhalten. Bei Android APK-Paketen werden auf diese Weise Bytecodedateien im .dex Format bereitgestellt.

Vorzugsweise können diese Binärdateien mit einem Decompiler in eine Pseudocode-Repräsentation der Softwareapplikation dekompiliert werden, beispielsweise in das smali Format. Ein solcher Pseudocode ist auch für eine Bedienperson leicht lesbar.

In einem Schritt (b) wird der im Binärcode oder als Pseudocode vorliegende Programmcode der Softwareapplikation gezielt nach Aufrufen von API-Funktionen durchsucht, die Netzwerkverbindungen aufbauen, zum Beispiel zu einen Transaktionsserver oder dergleichen. Bei den gefundenen API-Aufrufen wird die Variable erfasst, die innerhalb der Softwareapplikation die etablierte Netzwerkverbindung repräsentiert.

Eine solche Netzwerkverbindung wird in einer Pseudocode-Repräsentation zum Beispiel durch den Aufruf der API-Funktion Connection () erzeugt und der Verbindungsvariablen m_serverConnection zugewiesen:
m_serverConnection = new Connection(m_ipAdress, m-cryptoKey);

Die Verbindungsvariable m_serverConnection repräsentiert innerhalb der Softwareapplikation nun die neue Netzwerkverbindung zu dem Server mit der IP-Adresse m_ipAdress. Aufgrund der Semantik gängiger Programmiersprachen wird innerhalb der Softwareapplikation auf die neue Netzwerkverbindung durch Zugriff auf die Verbindungsvariable m_serverConnection zugegriffen und dadurch eine Datenkommunikation mit dem betreffenden Server initiiert.

Im Falle der objektorientierten Programmierung wird die Datenübertragung über eine Referenz bzw. einen Zeiger der Verbindungsvariablen bzw. des Verbindungsobjekts realisiert:
m_serverConnection.sendData(c_tokenUserDataFollows);

Im Fall der prozeduralen Programmierung wird die Verbindungsvariable als Handle bezeichnet und als Parameter einer Funktion zur Datenübertragung verwendet:
Network::sendData(hServerConnection, cTokenUserDataFollows);

Es wird immer auf den Zeiger Referenz bzw. den Handle zugegriffen, wenn über die betreffende Netzwerkverbindung Daten empfangen oder gesendet werden. Entsprechend lassen sich anhand der Verbindungsvariablen m_serverConnection in dem Programmcode der Softwareapplikation Transaktionsvariablen/-konstanten und Zuweisungsvariablen /-konstanten erkennen, die mit einer Datenübertragung bzw. der dadurch realisierten Transaktion im Zusammenhang stehen.

In der Praxis enthält ein Pseudocode üblicherweise keine derart aussagekräftigen Variablennamen, wie in dem obigen und den nachstehenden Beispielen. Die Beschreibung der vorliegenden Erfindung anhand des Beispiels der Fig. 1 orientiert sich daher nicht an den willkürlichen und austauschbaren Variablennamen als solchen, sondern vielmehr an dem erfinderischen Konzept, zu dessen verständlicher Beschreibung sie verwendet werden.

In einen Schritt (c) werden anhand der im vorherigen Schritt ermittelten Verbindungsvariablen Transaktionsvariablen und/oder Transaktionskonstanten identifiziert, welche bei der Nutzung der betreffenden Netzwerkverbindung verwendet werden, zum Beispiel im Zusammenhang mit Variablen, veränderlichen Datenstrukturen oder unveränderlichen Datenwerten, deren Inhalte über die Netzwerkverbindung versendet oder die über die Netzwerkverbindung mit Daten bestückt werden oder im Zusammenhang mit Aufrufen von Funktionen, die ein Senden und/ oder Empfangen über die Netzwerkverbindungen bewirken.

In einem Schritt (d) werden für jede so ermittelte Transaktionsvariable alle weiteren Variablen und Konstanten ermittelt, die sogenannten Zuweisungsvariablen und Zuweisungskonstanten, die im Zusammenhang mit Wertzuweisungen an die betreffende Transaktionsvariable stehen. Zum Beispiel wird eine Konstante, deren Wert mittels einer Wertzuweisung im Programmcode einer Transaktionsvariablen zugewiesen wird, als Zuweisungskonstante erkannt, denn sie steht in direktem Zusammenhang mit einer Datenkommunikation über diejenige Netzwerkverbindung, die im Schritt (b) in Form einer Verbindungsvariablen identifiziert wurde.

Das Vorgehen wird verdeutlicht am Beispiel des folgenden Pseudocodes, bei dem die Verbindungsvariable m_serverConnection eine Netzwerkverbindung zu dem Server mit der IP-Adresse m_ipAdress repräsentiert und m_cryptoKey als kryptographischer Schlüssel verwendet wird:

```
 m_serverConnection = new Connection(m_ipAdress, m_cryptoKey);
 [...]
 m_serverConnection.sendData(c_tokenUserDataFollows);
 m_serverConnection.sendData(m_userld);
 m_serverConnection.sendData(m_password);
 [...]
```

Die Transaktionsvariablen c_tokenUserDataFollows und m_userId und m_password bezeichnen Datenelemente oder auch komplexe Datenstrukturen, die an den Server gesendet werden.

Diese Transaktionsvariablen werden gemäß des obigen Schrittes (c) identifiziert. Sie werden aufgrund des unmittelbaren Zusammenhangs zu der Verbindungsvariablen und der betreffenden Netzwerkverbindung als sicherheitskritisch eingestuft und in eine Datenstruktur der abzusichernden Anteile der Softwareapplikation notiert.

Werte, die an anderer Stelle im Programmcode in beliebiger Weise den identifizierten Transaktionsvariablen zugewiesen werden, repräsentieren dann Zuweisungsvariablen und Zuweisungskonstanten gemäß dem nachfolgend noch genauer erläuterten Schrittes (d). So wird der Transaktionsvariablen m_userId eine Zeichenkette mit einer Benutzer-ID zugeordnet und der Transaktionsvariablen m_password deine Zeichenkette mit einen Password des betreffenden Benutzers, damit beides kryptographisch geschützt von der Softwareapplikation über die Netzwerkverbindung an den Server über tragen wird.

Es ist unmittelbar einsichtig, dass Authentisierungsinformationen eines Benutzers, der sich zum Beispiel über seine Banking-App und eine Netzwerkverbindung bei einem Server seiner Bank anmeldet, ebenso wie die anschließend übertragenen Transaktionsdaten extrem sensible und sicherheitskritische Daten sind und die betreffenden Anteile der Softwareapplikation, die diese Daten betreffen, entsprechend abgesichert werden müssen. Diese als besonders sicherheitskritisch identifizierten Transaktions-/Zuweisungsvariablen und Zuweisungskonstanten werden später im Schritt (e) entsprechend obfuskiert werden, das heißt, gegen Ausspähen und Manipulation abgesichert und verschleiert.

Gemäß des bereits angesprochenen Schrittes (d) werden anhand des entsprechenden Pseudocodes beispielhaft drei verschiedene alternative Varianten von Wertzuweisungen an Transaktionsvariablen rekursiv identifiziert. Diese drei Alternativen betreffen Varianten, mit denen Transaktionsvariablen Werte zugewiesen werden, die über die Netzwerkverbindung übertragen oder empfangen werden. Daneben kann es weitere sinnvolle Varianten und Alternativen geben, die ebenfalls innerhalb des Schrittes (d) zu prüfen sind.

Gemäß einem alternativen Schritt (d1) findet bei der Zuweisung eine Berechnung des Wertes, zum Beispiel als Zahlenwert, oder eine Konstruktion des Wertes, zum Beispiel als Zeichenkette statt. Zum Beispiel wird die Transaktionsvariable
m_userId = m_lastName + m_firstName + m_birthdate;
durch eine Stringoperation konstruiert aus einem Familiennamen (m_lastName), einem Vorname (m_firstName) und einen Geburtsdatum (m_birthdate). Die in diese Berechnung bzw. Konstruktion der Transaktionsvariablen eingehenden Zuweisungsvariablen und -konstanten werden in der Datenstruktur der später abzusichernden Anteile der Softwareapplikation notiert. In dem obigen Beispiel sind das die Zuweisungsvariablen m_lastName, m_firstName und m_birthdate.

Gemäß einem alternativen Schritt (d2) wird bei der Zuweisung ein Funktionsergebnis einer Funktion ermittelt und der betreffenden Transaktionsvariablen zugewiesen. Diese Funktion ist eine innerhalb der Softwareapplikation definierte Funktion, deren Programmcode selbst manipulierbar und schützbar ist. Zum Beispiel wird mit der Zuweisung
m_password = readFromSecureCache("password");
das Passwort mittels einer Lesefunktion aus einem sicheren Zwischenspeicher ausgelesen und der Transaktionsvariablen m_password zugewiesen. Entsprechend werden die Zuweisungsvariablen und -konstanten, die bei dem Funktionsaufruf verwendet werden, hier also der Funktionsparameter "password" als sicherheitskritisch eingestuft und in der Datenstruktur zur späteren Absicherung bzw. Obfuskierung notiert. Aber auch die Funktion readFromSecureCache ist sicherheitskritisch, denn sie steht im Zusammenhang mit einer Wertzuweisung an eine Transaktionsvariable und betrifft außerdem einen sicheren Zwischenspeicher. Sie kann außerdem auch abgesichert werden, denn sie ist innerhalb der Softwareapplikation definiert. Vorzugsweise wird sie deshalb auch in der Datenstruktur notiert.

Gemäß einem alternativen Schritt (d3) wird zur Wertzuweisung an eine Transaktionsvariable ein Funktionsergebnis einer API-Funktion ermittelt. API- Funktionen sind Bestandteil des Betriebssystems und stellen Programmierschnittstellen für Anwendungsprogrammierer dar, damit deren Softwareapplikationen Betriebssystemfunktionen und -ressourcen nutzen können. Als Betriebssystemfunktionen können sie durch das hier beschriebene Verfahren allerdings nicht abgesichert werden. Zum Beispiel wird mit der Zuweisung
m_password = m_guiTextbox.getUserlnput(c_boxStyleSecret);
das Passwort aus einem Texteingabefeld ausgelesen und der Transaktionsvariablen m_password zugewiesen. Hierbei ist m_guiTextbox. getUserInput eine API-Funktion und c_boxStyleSecret ein vorgegebener, konstanter Parameter, der das auszulesende Textfeld der Benutzeroberfläche angibt. Der Parameter repräsentiert also eine in der Datenstruktur zu notierende Zuweisungskonstante, denn er steht im Zusammenhang mit sicherheitskritischen Daten, die erst erhoben und dann über die Netzwerkverbindung an den Server übertragen werden.

Der Schritt (d) und dessen alternative Teilschritte, wie etwa die Schritte (d1), (d2) und (d3), werden vorzugsweise rekursiv ausgeführt, das heißt sie werden erneut aufgerufen, wenn die Definition oder Berechnung einer identifizierten Zuweisungsvariablen ihrerseits wieder Variablen und Konstanten verwendet, die ebenfalls als Zuweisungsvariablen/-konstanten in die Datenstruktur aufgenommen werden müssen.

Zum Beispiel wurde im Zusammenhang mit dem Schritt (d2) darauf hingewiesen, dass auch die innerhalb der Softwareapplikation definierte Funktion read-FromSecureCache sicherheitskritisch sei und in der Datenstruktur notiert wird. Bei einer rekursiven Ausführungsform wird als nächstens der Programmcode analysiert, der diese Funktion definiert und etwaige dort vorgenommenen Wertzuweisungen in dieser zweiten Rekursionsstufe ebenfalls als Zuweisungsvariablen/- konstanten notiert. Im Gegensatz dazu kann die im Zusammenhang mit dem Schritt (d3) angesprochene API-Funktion m_guiTextbox. getUserInput nicht mehr analysiert werden, denn deren Programmcode ist Teil des unveränderlichen Betriebssystems. Die Rekursion würde an dieser Stelle, genau wie bei Zuweisungskonstanten, beendet. Prinzipiell kann die Rekursion wahlweise bis zu einer vorgegebenen Rekursionstiefe ausgeführt werden oder bis sie beendet ist, weil keine weiteren Zuweisungsvariablen/-konstanten mehr auffindbar sind.

Gemäß einem Schritt (e) wird schließlich eine Absicherung der in der Datenstruktur notierten sicherheitskritischen Anteile der Softwareapplikation mittels einer geeigneten Sicherungseinrichtung vorgenommen, also derjenigen Codeabschnitte der Softwareapplikation, die Verbindungsvariablen, Transaktionsvariablen und Zuweisungsvariablen bzw. Zuweisungskonstanten betreffen. Als Sicherungseinrichtung kommt insbesondere ein Softwaretool in Frage, zum Beispiel ein Obfuskator. Mit einem solchen Obfuskator werden die abzusichernden Anteile geeignet verschleiert, damit sie nur noch schwer oder gar nicht mehr einem Reverse Engineering oder anderer Manipulationen und Ausspähungen zugänglich sind.

Der Obfuskator erzeugt so zum Beispiel aus einem Pseudocode der Softwareapplikation einen abgesicherten Pseudocode, der dann in einen Binärcode oder Bytecode als abgesicherte Softwareapplikation kompiliert wird. Alternativ kann der Obfuskator direkt auf einen Binärcode der Softwareapplikation angewandt werden, zum Beispiel auf eine Datei im .dex Format einer Android App oder im Maschinencode. Diese Binärdateien werden schließlich gegebenenfalls zusammen mit weiteren Ressourcen der Softwareapplikation in ein Applikationspaket transformiert, beispielsweise in ein APK-Paket mit der abgesicherten Softwareapplikation, und auf einer Softwaredistributionsplattform wie dem Android Play Store zum Download angeboten. Vor dort wird sie von Nutzern auf ein mobiles Endgerät oder eine andere Computervorrichtung geladen und als abgesicherte Softwareapplikation genutzt.

Während die vorstehende Beschreibung die Erfindung vornehmlich am Beispiel einer Softwareapplikation für das Android Betriebssystem beschreibt, ist sie selbstverständlich ebenso auf andere derartige Szenarien und Software-Ökosysteme anwendbar, insbesondere auch auf das Apple iOS Betriebssystem und die darunter verwendeten Formate.

Auch ist das beschriebene Verfahren nicht darauf beschränkt, auf fertige Applikationspakete angewandt zu werden, denn es kann nötigenfalls ohne weiteres in den Entwicklungsprozess eingebunden werden. Beispielsweise kann im Schritt (a) ein Quellcode der Softwareapplikation bereitgestellt werden und mittels der Schritte (b) bis (d) der Quellcode abgesichert werden. Außerdem kann auch der Programmierer Anteile im Quellcode identifizieren, die dann in der Datenstruktur notiert und später vom Obfuskator im Schritt (e) verschleiert werden. Alternativ können die Schritte (b) bis (e) auch auf einen Binärcode, Maschinencode oder Bytecode der Softwareapplikation angewandt werden.

## Patentansprüche

1. Verfahren zum automatischen Erkennen von abzusichernden Anteilen einer Softwareapplikation, wobei das Verfahren die folgenden Schritte umfasst:
(a) Bereitstellen von Programmcode der Softwareapplikation;
(b) Identifizieren von Aufrufen von API-Funktionen zum Aufbau von Netzwerkverbindungen in dem Programmcode und Erfassen einer Verbindungsvariablen für einen identifizieren Aufruf, welche die Netzwerkverbindung repräsentiert;
(c) Identifizieren von Transaktionsvariablen und vorzugsweise Transaktionskonstanten, welche im Zusammenhang mit einer erfassten Verbindungsvariablen genutzt werden, und Speichern von Information über identifizierte Transaktionsvariablen und vorzugsweise Transaktionskonstanten in einer Datenstruktur, welche abzusichernde Anteile der Softwareapplikation betrifft; und
(d) Identifizieren von Zuweisungsvariablen und/oder Zuweisungskonstanten, welche in Zusammenhang mit einer Zuweisung eines Werts an eine der identifizierten Transaktionsvariablen stehen, und Speichern von Information über die identifizierten Zuweisungsvariablen und/oder Zuweisungskonstanten in der Datenstruktur.

2. Verfahren nach Anspruch 1, wobei der Schritt (d) folgende Schritte umfasst:
(d1) wenn die Zuweisung des Werts durch eine Berechnung erfolgt:
Identifizieren von Zuweisungsvariablen und/oder Zuweisungskonstanten, welche bei der Berechnung des zugewiesenen Werts verwendet werden; und/ oder
(d2) wenn die Zuweisung des Werts durch einen Aufruf einer Funktion innerhalb der Softwareapplikation erfolgt: Identifizieren von Zuweisungsvariablen und/oder Zuweisungskonstanten, welche von der Funktion zur Berechnung eines Funktionsergebnisses verwendet werden; und/oder
(d3) wenn die Zuweisung des Werts durch einen Aufruf einer Funktion außerhalb der Softwareapplikation erfolgt, insbesondere durch einen Aufruf einer API-Funktion: Identifizieren von Zuweisungsvariablen und/oder Zuweisungskonstanten, welche an die Funktion übergeben werden;
wobei Informationen über die in einem der obigen Schritte identifizierten Zuweisungsvariablen und/ oder Zuweisungskonstanten in der Datenstruktur gespeichert werden.

3. Verfahren nach Anspruch 1 oder 2, wobei der Schritt (d) für alle identifizierten Zuweisungsvariablen rekursiv ausgeführt wird.

4. Verfahren nach Anspruch 3, wobei das rekursive Ausführen für eine vorgegebene Anzahl von Wiederholungen ausgeführt wird.

5. Verfahren nach einem der vorhergehenden Ansprüche, wobei der Schritt (a) folgende Schritte umfasst:
(a1) Bereitstellen der Softwareapplikation in binärer Form; und
(a2) Disassemblieren und/oder Dekompilieren der Softwareapplikation, um eine Pseudocode-Repräsentation der Softwareapplikation als Programmcode bereitzustellen.

6. Verfahren nach einem der vorhergehenden wobei eine Android- oder iOS-Softwareapplikation bereitgestellt wird.

7. Verfahren nach einem der vorhergehenden Ansprüche, wobei der Schritt (a) folgende Schritte umfasst:
(a1) Bereitstellen der Softwareapplikation als Applikationspaket; und
(a2) Zerlegen des Applikationspakets in Binärcodedateien der Softwareapplikation, um die Binärcodedateien als Programmcode bereitzustellen.

8. Verfahren nach Anspruch 7, wobei die Binärcodedateien Maschinencode oder Bytecode, insbesondere Java-Bytecode oder Dalvik-Bytecode enthalten.

9. Verfahren nach einem der vorhergehenden Ansprüche, wobei das Verfahren den weiteren Schritt umfasst:
(e) Absichern der Softwareapplikation durch Erzeugen einer abgesicherten Softwareapplikation basierend auf der Datenstruktur durch eine Sicherungseinrichtung.

10. Verfahren nach Anspruch 9, wobei die Softwareapplikation durch einen Obfuskator als Sicherungseinrichtung abgesichert wird.

11. Verfahren nach Anspruch 9 oder 10, wobei das Verfahren den Schritt des Transformierens der abgesicherten Softwareapplikation in ein abgesichertes Ap-plikationspaket umfasst.

12. Verfahren nach Anspruch 11, wobei das Verfahren weiter den Schritt des Auslieferns der abgesicherten Softwareapplikation durch Einstellen der abgesicherten Softwareapplikation in eine Softwaredistributionsplattform, insbesondere den Google Play Store oder den Apple App Store umfasst.

13. Abgesicherte Softwareapplikation, die durch ein Verfahren nach einem der Ansprüche 9 bis 12 erzeugt wurde.

14. Computervorrichtung mit darin abgespeichertem Programmcode, welcher die Computervorrichtung veranlasst, ein Verfahren nach einem der Ansprüche 1 bis 12 auszuführen, wenn der Programmcode von einem Prozessor der Computervorrichtung ausgeführt wird.

15. Computervorrichtung, insbesondere mobiles Endgerät, auf der eine Softwareapplikation gemäß Anspruch 13 bereitgestellt ist.

## Claims

1. A method for automatically detecting portions of a software application to be secured, the method comprising the following steps:
(a) providing program code of the software application;
(b) identifying calls of API functions for establishing network connections in the program code and detecting a connection variable for an identified call that represents the network connection;
(c) identifying transaction variables and preferably transaction constants used in connection with a detected connection variable, and storing information about identified transaction variables and preferably transaction constants in a data structure, which relates to portions of the software application to be secured; and
(d) identifying assignment variables and/or assignment constants associated with an assignment of a value to one of the identified transaction variables and storing information about the identified assignment variables and/or assignment constants in the data structure.

2. The method according to claim 1, wherein step (d) comprises the following steps:
(d1) if the assignment of the value is done by a calculation:
identifying assignment variables and/or assignment constants, which are used in the calculation of the assigned value; and/or
(d2) if the assignment of the value is done by a function call within the software application;
identifying assignment variables and/or assignment constants, which are used by the function for calculating a function result; and/or
(d3) if the assignment of the value is done by a function call outside the software application, in particular by an API function call:
identifying assignment variables and/or assignment constants, which are passed to the function;
wherein information about the assignment variables and/or assignment constants identified in any of the above variables is stored in the data structure.

3. Method according to claim 1 or 2, wherein step (d) is executed recursively for all identified assignment variables.

4. The method according to claim 3, wherein the recursive execution is executed for a specified number of repetitions.

5. Method according to any one of the preceding claims, wherein step (a) comprises the following steps:
(a1) Providing the software application in binary form; and
(a2) Disassembling and/or decompiling the software application to provide a pseudo-code representation of the software application as a program code.

6. Method according to any one of the preceding claims, wherein an Android or iOS software application is provided.

7. Method according to any one of the preceding claims, wherein step (a) comprises the following steps:
(a1) Providing the software application as an application package; and
(a2) Decomposing the application package into binary code files of the software application, to provide the binary code files as program code.

8. The method according to claim 7, wherein the binary code files contain machine code or byte code, especially Java byte code or Dalvik byte code.

9. The method according to any one of the preceding claims, wherein the method comprises the following further step:
(e) Securing the software application by creating a secured software application based on the data structure by a securing device.

10. The method according to claim 9, wherein the software application is secured by an obfuscator as a securing device.

11. The method according to claim 9 or 10, wherein the method comprises the step of transforming the secured software application into a secured application package.

12. The method according to claim 11, wherein the method further comprises the step of delivering the secured software application by placing the secured software application on a software distribution platform, in particular the Google Play Store or the Apple App Store.

13. Secured software application, which is generated by a method according to any one of claims 9 to 12.

14. Computer apparatus having program code stored therein, which causes the computer apparatus to perform a method according to any one of claims 1 to 12, when the program code is executed by a processor of the computer apparatus.

15. Computer apparatus, in particular a mobile terminal, on which a software application according to claim 13 is provided.

## Revendications

1. Procédé de reconnaissance automatique de parties à sécuriser d'une application logicielle, cependant que le procédé comprend les étapes suivantes:
(a) mise à disposition de code de programme de l'application logicielle;
(b) identification d'appels de fonctions API pour l'établissement de connexions réseau dans le code de programme, et saisie d'une variable de connexion pour un appel identifié, laquelle représente la connexion réseau;
(c) identification de variables de transaction et de préférence de constantes de transaction, lesquelles sont utilisées en rapport avec une variable saisie de connexion, et mémorisation d'information sur des variables de transaction identifiées et de préférence sur des constantes de transaction dans une structure de données qui concerne des parties à sécuriser de l'application logicielle; et
(d) identification de variables d'affectation et/ ou de constantes d'affectation, lesquelles sont en rapport avec une affectation d'une valeur à une des variables de transaction identifiées, et mémorisation d'informations sur les variables d'affectation et/ou constantes d'affectation identifiées dans la structure de données.

2. Procédé selon la revendication 1, cependant que l'étape (d) comprend les étapes suivantes:
(d1) si l'affectation de la valeur a lieu par un calcul:
identification de variables d'affectation et/ou de constantes d'affectation, lesquelles sont employées lors du calcul de la valeur affectée; et/ou
(d2) si l'affectation de la valeur a lieu par un appel d'une fonction à l'intérieur de l'application logicielle:
identification de variables d'affectation et/ou de constantes d'affectation, lesquelles sont employées par la fonction pour le calcul d'un résultat de fonction; et/ou
(d3) si l'affectation de la valeur a lieu par un appel d'une fonction à l'extérieur de l'application logicielle, en particulier par un appel d'une fonction API:
identification de variables d'affectation et/ou de constantes d'affectation, lesquelles sont transmises à la fonction;
cependant que des informations sur les variables d'affectation et/ou constantes d'affectation identifiées lors d'une des étapes ci-dessus sont mémorisées dans la structure de données.

3. Procédé selon la revendication 1 ou 2, cependant que l'étape (d) est exécutée récursivement pour toutes les variables d'affectation identifiées.

4. Procédé selon la revendication 3, cependant que l'exécution récursive est exécutée pour un nombre prédéterminé de répétitions.

5. Procédé selon une des revendications précédentes, cependant que l'étape (a) comprend les étapes suivantes:
(a1) mise à disposition de l'application logicielle sous forme binaire; et
(a2) désassemblage et/ou décompilation de l'application logicielle afin de mettre à disposition en tant que code de programme une représentation en pseudocode de l'application logicielle.

6. Procédé selon une des revendications précédentes, cependant qu'une application logicielle androïde ou iOS est mise à disposition.

7. Procédé selon une des revendications précédentes, cependant que l'étape (a) comprend les étapes suivantes:
(a1) mise à disposition de l'application logicielle sous forme de kit applications; et
(a2) fractionnement du kit applications en fichiers de code binaire de l'application logicielle afin de mettre à disposition les fichiers de code binaire en tant que code de programme.

8. Procédé selon la revendication 7, cependant que les fichiers de code binaire contiennent du code machine ou code octet, en particulier du code octet Java ou du code octet Dalvik.

9. Procédé selon une des revendications précédentes, cependant que le procédé comprend l'étape suivante:
(e) sécurisation de l'application logicielle par génération d'une application logicielle sécurisée, sur la base de la structure de données par un équipement de protection.

10. Procédé selon la revendication 9, cependant que l'application logicielle est sécurisée en tant qu'équipement de protection par un code impénétrable.

11. Procédé selon la revendication 9 ou 10, cependant que le procédé comprend l'étape de la transformation de l'application logicielle sécurisée en un kit applications sécurisé.

12. Procédé selon la revendication 11, cependant que le procédé comprend en outre l'étape de la délivrance de l'application logicielle sécurisée par introduction de l'application logicielle sécurisée dans une plateforme de distribution de logiciel, en particulier dans le Google Play Store ou le Apple App Store.

13. Application logicielle sécurisée qui a été générée par un procédé selon une des revendications de 9 à 12.

14. Dispositif d'ordinateur comportant du code de programme y étant mémorisé, lequel amène le dispositif d'ordinateur à exécuter un procédé selon une des revendications de 1 à 12 quand le code de programme est exécuté par un processeur du dispositif d'ordinateur.

15. Dispositif d'ordinateur, en particulier terminal mobile, sur lequel une application logicielle selon la revendication 13 est mise à disposition.
